# EUROPEAN PATENT APPLICATION

(11) **EP 0 772 354 A2**
(43) Date of publication of application: **07.05.1997**
(21) Application number: 96307785.4
(22) Date of filing: 28.10.1996
(51) Int. Cl.: H04N 5/445

(54) **Receiver and receiving method**

(30) Priority: 01.11.1995 JP 308390/95; 13.11.1995 JP 318615/95
(71) Applicant: SONY CORPORATION, Tokyo 141 (JP)
(72) Inventor: Sato, Masahiko, c/o Sony Corp. Int. Prop. Dpt., Shinagawa-ku, Tokyo 141 (JP); Kohashi, Yukari, c/o Sony Corp.Int. Prop. Dpt., Shinagawa-ku, Tokyo 141 (JP); Gendo, Kenichi, c/o Sony Corp. Int. Prop. Dpt., Shinagawa-ku, Tokyo 141 (JP); Hoshiko, Takao, c/o Sony Corp. Int. Prop. Dpt., Shinagawa-ku, Tokyo 141 (JP)
(74) Representative: Pratt, Richard Wilson

(57) **Abstract**

A receiver device includes a tuner; a controller for presetting any one of broadcasting stations receivable by the tuner; memory that stores station names of the broadcasting stations and their auxiliary data; a remote controller for transmitting a record reservation code and inputs for selection; a read-out device for reading out the auxiliary data corresponding to one of station names selected by the remote controller; and a device for setting the auxiliary data read by the read-out device to the broadcasting station preset by the controller. The remote controller further includes a controller that receives inputs from a record reservation mode key and numerical keys, then generates a remote control signal, and selectively generates a record reservation mode ON code or a record reservation mode OFF code during its control process. Thus, the remote controller changes the recorder device from a record reservation ON mode to a record reservation OFF mode, or vice versa, in response to the record reservation mode ON code and the record reservation mode OFF code.

## Description

This invention relates to a receiving device, a receiving method and to a receiving system each for receiving a broadcast.

This invention also relates to a system for recording a broadcast.

An illustrative embodiment of this invention described hereinafter relates to a receiver having an OSD (On Screen Display) or other display apparatus that can display information to facilitate a user to readily select and/or preset a desired broadcasting station, desired program, and so forth.

In Europe, for example, ITP (Intelligent Tuning Preset) is being introduced to permit a user to search for receivable broadcasting stations, to preset the result of the search and to display the preset contents on the screen in an automatic mode. As to a broadcasting station that transmits a station code signal such as teletext signal including its own ID code or VPS (Video Programming System) including its own ID and program IDs of its individual programs to enable automatic identification, a user using such a receiver can select or preset auxiliary data of the broadcasting station given in form of a show view by reference to the information for automatic identification. The show view is also called VCR plus, Video Plus +, or G code, and includes information indicating the day and time of a program, its broadcasting channel, and so forth, that can be used by a user to preset recording of a desired program in VTR.

As to a broadcasting station that does not transmit a signal for automatic identification, no auxiliary data is shown on the display. If a user desires to receive a program from such a broadcasting station, he must manually enter the name of the broadcasting station and its auxiliary data, letter by letter or number by number, through his entry device. In this case, the user is typically required to obtain the code of the show view or other auxiliary data from a booklet, and this code is a sequence of numerals. Therefore, manual entry of the code by the user is a troublesome task and liable to cause an error.

Aspects of the invention are specified in the claims.

Illustrative embodiments of the invention described hereinafter seek to provide a receiver and a receiving method with which a user can select any desired station and program without paying attention to the show view or other auxiliary data.

For a better understanding of the present invention, reference will now be made by way of example to the accompanying drawings, in which: -
Fig. 1 is a block diagram of a receiver according to an embodiment of the invention;
Fig. 2 is a diagram for explanation of an automatic channel preset process according to an embodiment of the invention;
Fig. 3 is a diagram for explanation of a process for setting a guide channel according to an embodiment of the invention;
Fig. 4 is a diagram for explanation of another process for setting a guide channel according to an embodiment of the invention;
Fig. 5 is a diagram for explanation of a process for setting a guide channel and for replacement of programs according to an embodiment of the invention;
Fig. 6 is a flow chart of an automatic channel preset process according to an embodiment of the invention;
Fig. 7 is a diagram schematically showing the operation panel of a remote commander having LCD, which copes with show view codes, according an embodiment of the invention; and
Fig. 8 is a flow chart of a process of ON/OFF control of the mode for show view codes.

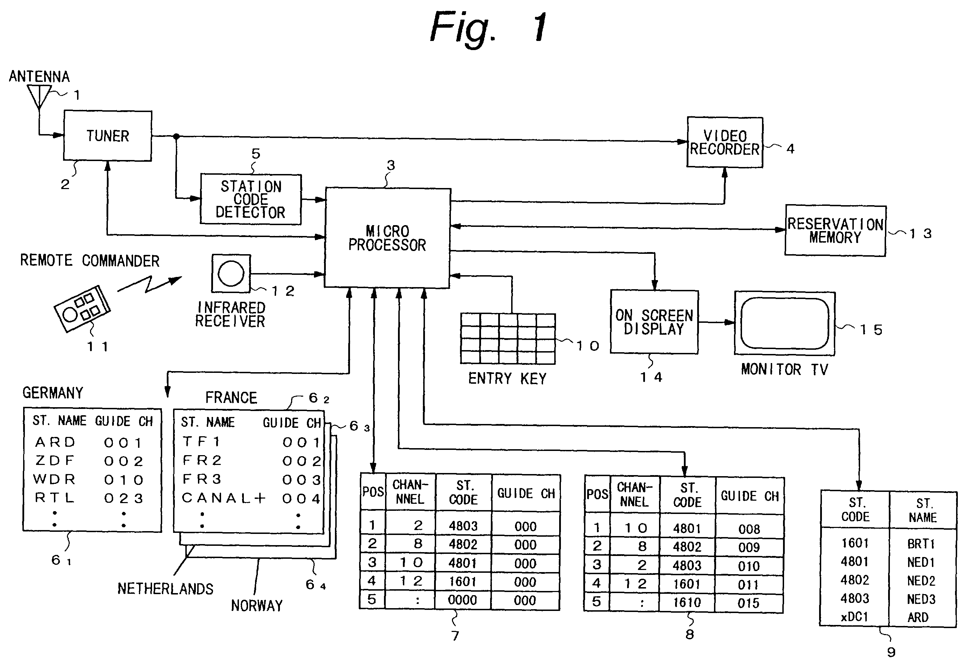

An embodiment of the invention is described below with reference to the drawings. Fig. 1 is a block diagram showing an arrangement of a receiver to which the invention is applied. In Fig. 1, TV broadcasting waves received by an antenna 1 are sent to a tuner circuit 2. The tuner circuit 2 is supplied with a tuner control signal, which may be a tuning voltage, from a microprocessor 3 to tune it at a desired channel. In turn, the tuner circuit 2 sends to the microprocessor 3 a data signal such as AFT signal. The video signal selected by the tuner circuit 2 is sent to a video record circuit 4 which records the video signal when it is set in the record mode under the control of the microprocessor 3.

The video signal selected by the tuner circuit 2 is sent to a station code detector circuit 5 as well such that the station code is detected there. In this embodiment, detection of the station code follows a predetermined order of priority on the basis of information on the country and language entered by a user through a remote commander 11 or a key entry circuit 10. Auxiliary codes such as show view are displayed in response to the entered information on the country. The auxiliary codes contain a guide channel (a number assigned to the broadcasting station in each country), the station's service mark, the name of the country to which the distributer belongs, and so forth. In this example, explanation is made using only the guide channel for simplicity of the explanation. As to a country including different areas using different languages, such as Belgium having the French language area and the Dutch language area, information on languages is also entered.

With the receiver device, the user inputs the name of the station of a program that he desires to make reservation for receiving, and the code indicating the guide channel, by referring to a TV program guide, for example, through the remote commander 11 or the key entry circuit 11 attached to the receiver device. Details of the remote commander 11 are explained later. In response to the entry of these items, the microprocessor 3 in the receiver device decodes the guide channel, and sets in the reservation memory 13 the day and start time of the program, end time of the program and a channel of the tuner circuit 2 corresponding to the guide channel, which form the record reservation information. When the reserved start time matures, the microprocessor 3 supplies the tuner circuit 2 with a tuner control signal to make it receive the selected channel set in the reservation memory 13, and also supplies a control signal to set the video record circuit 4 in its record mode.

When the tuner circuit 2 successfully receives the broadcasting in response to the tuner control signal, it delivers AFT or other data signal to the microprocessor 3. There are provided memories 6, 7 and 8 for storage of the information necessary for detecting the station code, for storage of information necessary for linking a guide channel to the station, and for storing the detected station code, tuner channel and guide channel in linkage.

The memory 6 previously prepares tables previously storing information indicating relations between names of broadcasting stations of respective countries and guide channels. In the tables shown in Fig. 1, names of broadcasting stations and guide channels are stored respectively for Germany 61, France 62, Holland 63 and Norway 64. The memory 7 prepares a table storing relations between station codes and guide channels of respective countries in an order of priority. In this table, the code "0000" in the column of station codes and the code "000" in the column of guide channels indicate unknown codes. The memory 8 prepares a table of the receiver device itself, which stores relations between station codes and guide channels for respective countries, like the memory 7, in an order of priority. The memory 9 prepares a table in which station codes and station names are linked.

Next explained is a process for automatic channel preset and setting of a guide channel by using the receiver device shown above. First explained is the automatic channel preset process. The process begins with a user's operation to set the receiver device in the automatic channel preset mode by pressing an automatic channel preset key on the remote commander 11 or the key input circuit 10 of the receiver device. Information entered through the remote commander 11 is once converted into infrared rays, then converted electrical signals in an infrared ray receiver circuit 12, and introduced into the microprocessor 3. On the other hand, information entered through the key input circuit 10 is directly introduced into the microprocessor 3.

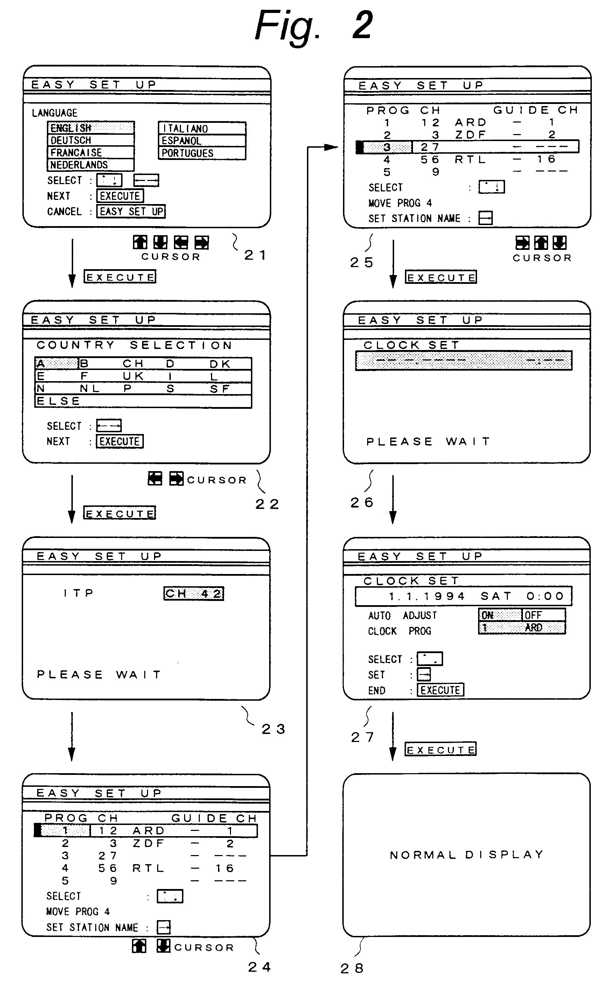

When the automatic channel preset process starts, a setup menu labelled "EASY SET UP" in Fig. 2 is displayed on a monitor TV 15 through an OSD (On Screen Display) circuit 14. The "EASY SET UP" first provides a language selection menu on the monitor TV 15 as shown by the image 21 in Fig. 2 to permit a user to press up, down, left and right cursor keys on the remote commander 11 to move the cursor on a desired position. When the user presses an execution key while positioning the cursor at the position of a desired language, the language is selected. In this example, the English language has been selected.

After selection of the language, a desired country is selected in a similar manner. In this case, the monitor TV 15 provides a country selection menu as shown by image 22 to permit a user to move the cursor to a desired position by pressing the left or right cursor key. In this case, the cursor currently points the country named "A". The user may change the country, if necessary, in the same manner as taken for selection of the language. The sequence of selection of countries and selection of languages may be reverse. Once the language and the country have been selected in the above process, the tuner circuit 2 is automatically preset (image 23), and a post-preset channel list appears as shown by image 24. Here again, the user may moves the cursor to the position of the desired broadcasting station by pressing the up or down cursor key. As shown on the image 24, the list shows names of the stations and guide channels as their auxiliary data for some and does not for the others. This is because the broadcasting stations and their corresponding guide channels cannot be specified regarding the broadcasting stations that do not transmit station codes.

The next image 25 permits the user to point a desired station by move the cursor to the position of the desired station through the up or down cursor key and to select the station by pressing the right cursor key. Thus, the user moves the cursor to the desired station as shown on the image 25, and decides the content of the program 3. When he desires a change in the content of another program, he may move the cursor to a desired station and determine the content of the program. After all of the desired changes in the contents of programs is completed, the execution key is pressed to decide the stations. When the stations are decided, the clock count is automatically set as shown on the image 26, and the reserved days and times are read out from the memory and displayed on the monitor TV 15 (image 27). When the user presses the execution key confirming no need for changes in contents of the information in the image 27, the monitor TV 15 restarts to display ordinary TV broadcasting images or VCR reproduced images as shown by the image 28.

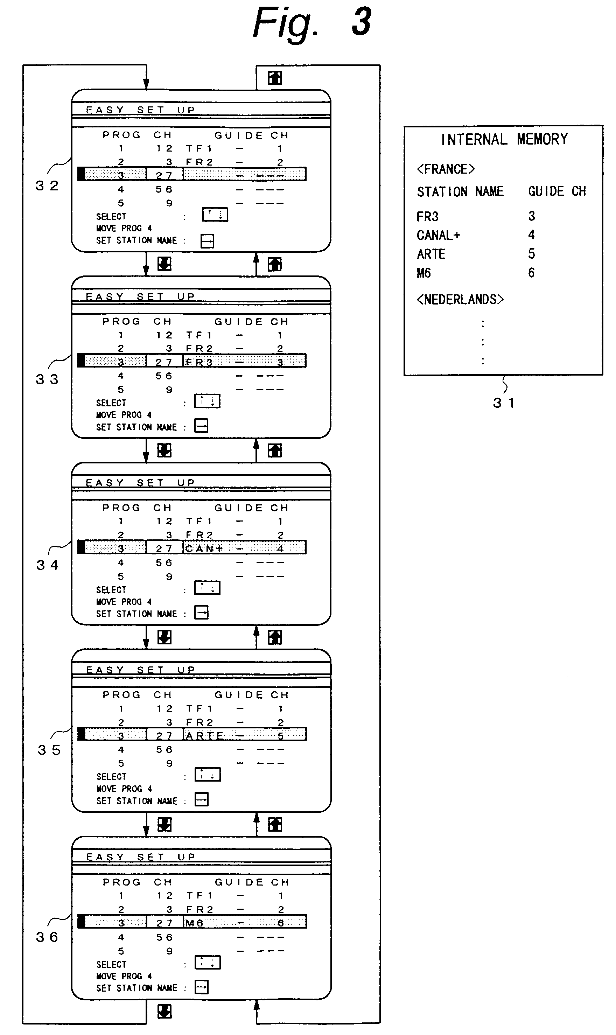

Next explained is a process for setting a desired station name and its auxiliary guide channel with reference to Fig. 3 which shows an example in which the English language is selected as the desired language, France is selected as the desired country, and a guide channel for program 3 is to be set. To retrieve the status of the image 25, the user moves the cursor to the position of program 3, and presses the right cursor key. Thus, the menu for selecting a station name appears. In this status, the user may press the up or down cursor key to display station names and guide channels from the table stored in the memory 31 in the memory 31 within the receiver device, one by one, in sequence.

When the user presses the down cursor key on the image 32, the station "FR3" and its guide channel "3" that are the first content in the group of French stations and their guide channels stored in the memory 31 are displayed (image 33). When the user once again presses the down cursor key, the next station "CANAL+" and its guide channel "4" are displayed (image 34). When the user once again presses the down cursor key, the next station "ARTE" and its guide channel "5" are displayed (image 35).

When the user once again presses the down cursor key, the next station "M6" and its guide channel "6" are displayed (image 36). When the user once again presses the down cursor key, the first image 32 with no station and no guide channel displayed is restored. In this manner, stations and guide channels stored in the memory 31 are sequentially displayed in response to manipulation of the cursor key. If the up key is pressed, then the stations and guide channels are displayed in the opposite order.

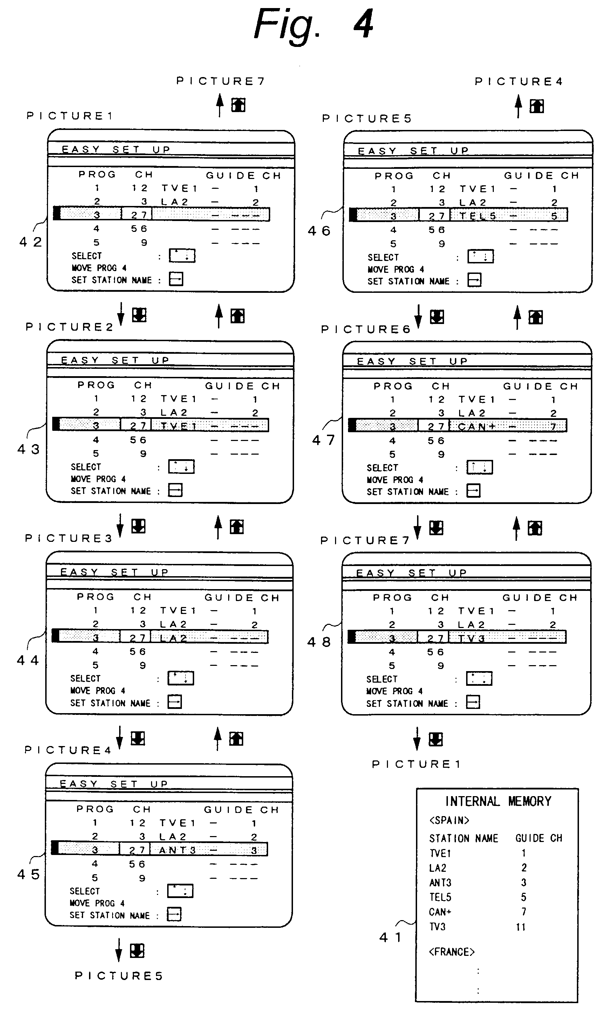

Another process for setting a guide channel is explained below with reference to Fig. 4 illustrating an example in which the English language is selected as the desired language, Spain is selected as the desired country, and a guide channel of program 3 is to be set. To retrieve the status of the image 25, the user moves the cursor to the position of program 3, and presses the right cursor key. Thus, the menu for selecting a station name and its guide channel appears. In this status, the user may press the up or down cursor key to display station names and guide channels from the table stored in the memory 31 in the memory 31 within the receiver device, one by one, in sequence.

When the user presses the down cursor key on the image 42, the station "TVE1" that is the first one of stations stored in the memory 31 is displayed (image 43). When the user once again presses the down cursor key, the next station "LA2" is displayed (image 44). When the user once again presses the down cursor key, the next station "ANT3" and its guide channel "3" are displayed (image 45).

When the user once again presses the down cursor key, the next station "TEL5" and its guide channel "5" are displayed (image 46). When the user once again presses the down cursor key, the next stored station "CAN+" and its guide channel "7" are displayed (image 47). When the user once again presses the down cursor key, the next stored station "TV3" is displayed (image 48). In this manner, stations and guide channels stored in the memory 31 are sequentially displayed in response to manipulation of the cursor key like in the former example. Here again, if the up key is pressed, then the stations and guide channels are displayed in the opposite order.

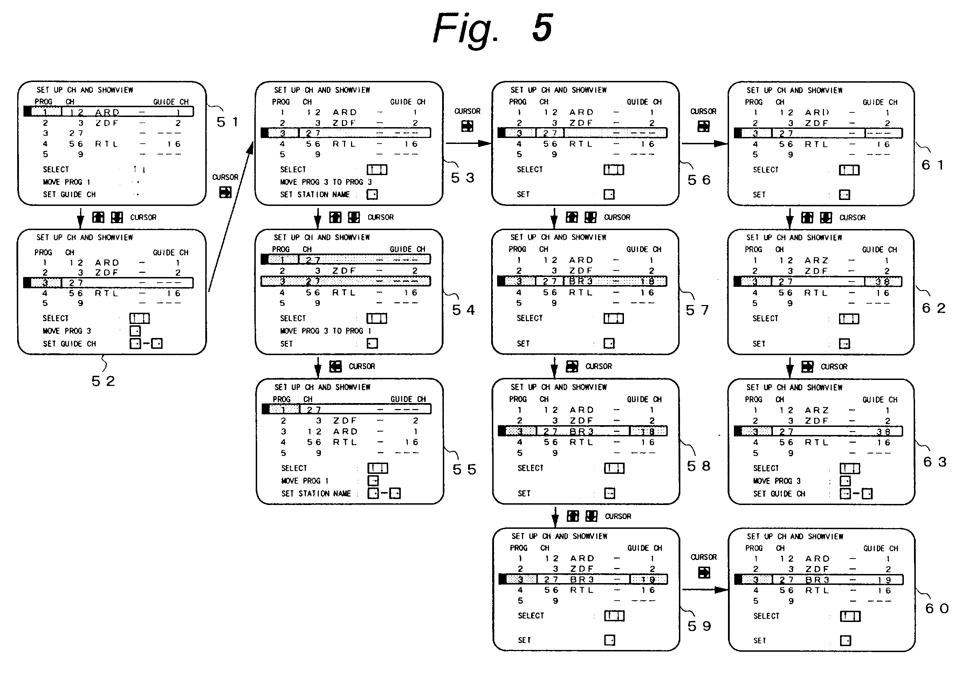

An example of setting a guide channel and replacing programs in an ITP connection model is shown in Fig. 5. After selection of a language and a country as explained above, the tuner circuit 2 is preset to display a channel list on the monitor TV 15 (image 51). After that, the cursor is moved to the position of program 3 as shown on the image 52 by pressing the up or down cursor key. When the right cursor key is pressed in this status, the monitor TV 15 displays the menu (image 53) permitting the user to change the station name and the guide channel set at program 3 as already explained above.

By pressing the up or down cursor key from the status of image 53, the user points another program (program 1 in this example) to which the guide channel of program 3 is to be moved (image 54). When the user presses the left cursor key at the position of program 1, the guide channel of the program 3 is moved to the position of program 1, and the guide channel formerly set at program 1 is moved to the position of program 3. That is, guide channels of programs 1 and 3 are replaced with each other.

When the right cursor key is pressed from the status of image 53, another image 56 is shown to permit the user to select a station name and its auxiliary guide channel. When the user presses the up or down cursor key on the image 56, station names and guide channels are sequentially displayed from the table stored in the memory in the receiver device (image 57). If the user wants to change the guide channel alone in the program 3 shown on the image 57, he may press the right cursor key to display the image 58. In this status, the user may press the up or down cursor key to incrementally or decrementally change the number of the guide channel like 1→2→···→255→1 until a desired guide channel number appears as shown on the image 59. When the right cursor key is pressed here, the new guide channel is set (image 60).

When the right cursor key is pressed on the image 56, another image 61 is displayed, which permits a user to incrementally or decrementally change the number of the guide channel like 1→2→···→255→1 by pressing the up or down cursor key. When the user sequentially presses right cursor key while a desired new guide channel number is displayed, the new guide channel is set (image 63).

That is, a single press onto the right cursor key from the status of image 52 results in the status of the display for replacement of guide channels, and a double press onto the right cursor key from the status of image 52 results in the status of the display for selecting a guide channel. Further, in the status of image 56, a guide channel is set by manipulation of the right cursor key independently of manipulation of the up or down cursor key.

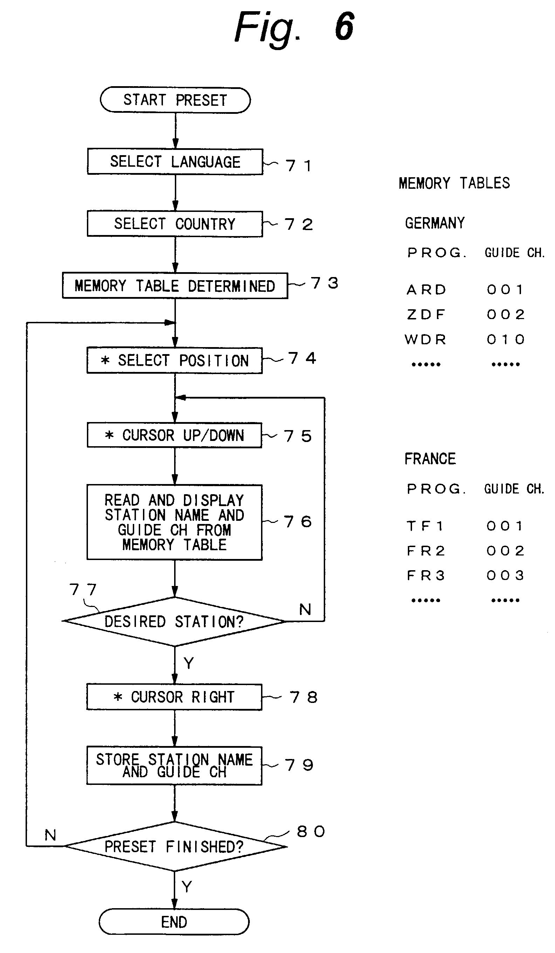

An automatic channel preset process by software is shown in the flow chart of Fig. 6. The process begins with step 71 where a desired language is selected. In the next step 72, the country where the user currently stays is input. These steps 71 and 72 may be reverted. After the language and the country are determined, determination is made in step 73 on whichever country the table should be prepared for from the built-in memory in the receiver device.

In the next step 74, the position of the cursor on the selected table is determined. When the table is first used, the cursor is located at the top position. In step 75, the cursor is moved to the position of a desired station by operation of the up or down cursor key. In step 76, the name of the station pointed by the cursor, its guide channel, etc. are read out from the memory table, and displayed on the monitor TV 15. In the next step 77, it is judged whether the station on the display is the desired one or not. If so, the process goes to step 78. If not, the process returns to step 75.

In step 78, the right cursor key is pressed to select the station and the guide channel at the position the cursor currently points. In the next step 79, the selected station name and its guide channel are stored. In the next step 80, it is judged whether all jobs for selection is completed. If not, the process returns to step 74. If so, the sequence finishes, and the automatic channel preset process is completed.

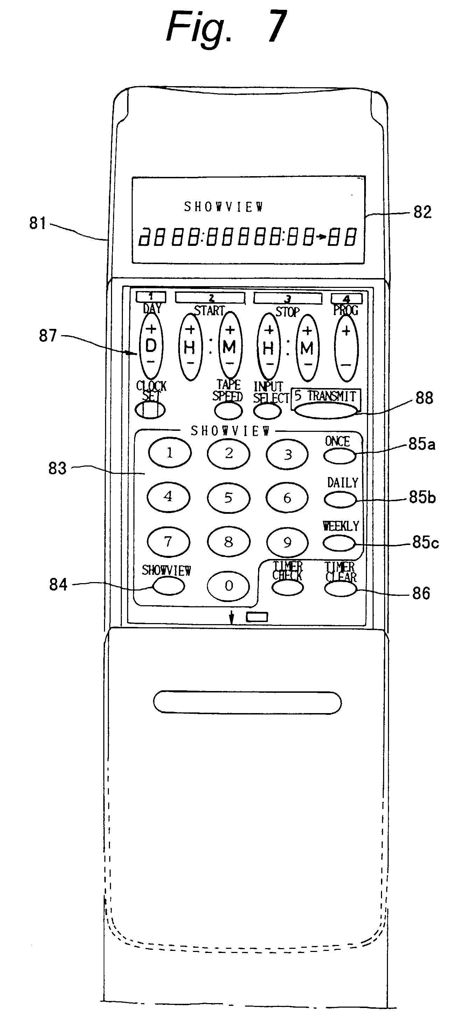

Fig. 7 shows a remote commander having VTR and LCD (Liquid Crystal Display) in compliance with show view codes according to an embodiment of the invention. Numeral 81 denotes the remote commander. An output signal, such as mode setting ON/OFF signal, show view code, or the like, is sent from the remote commander 81 to the infrared receiver circuit 12 provided in VTR. In response to the output signal, i.e. the show view code number, reservation of recording is made in the VTR, and the desired TV program is recorded on a video tape.

More specifically, the remote commander 1 issues a mode setting ON signal to the VTR by infrared remote control. The VTR in receipt of the mode setting ON signal is set ON for mode setting. At the same time, representation on the screen of the monitor TV 15 is changed to display a menu for entering a show view code. A user can review the show view code entry menu on the screen or the LCD on the remote commander 81 when he enters a desired show view code, and can therefore enter proper numbers without errors. After the user successfully enters the show view code, the microprocessor 3 built in the VTR decodes the received show view code, and establishes the status available for the reserved recording corresponding to the show view code. In this case, information including the channel number of the TV program, start time of the program, end time of the program, and so on, which were obtained by decoding the show view code number, may be displayed on the screen of the monitor TV 15.

The user can confirm the record reservation of the desired TV program, by reviewing the show view code number displayed on the screen of the monitor TV 15. VTR records the TV program on a video tape in accordance with the show view code shown on the screen.

In Fig. 7, numeral 82 denotes an LCD employed as a display means for displaying what is entered through the entry keys. 83 denotes a show view code key panel. By pressing a show view key 84 in the show view code key panel 83, the mode for using show view codes is set ON or OFF. Numerical keys from 0 to 9 in the show view code key panel 83 are used to select any show view code number.

A once (spot reservation) key 85a, daily (daily reservation) key 85b, and weekly (weekly reservation) key 85c are used to select spot, daily or weekly recording. A timer clear key 86 is used to reset the timer for setting the show view code mode and to rewrite the show view code number (re-enter a new show view code number).

Increment/decrement keys 87 are used to select the day and time of reservation upon manual record reservation. A transmit key 88 is used to transfer the selected contents to the VTR. Although LCD 82 displays the mode setting ON or OFF, show view code number or the day and time of manually reserved recording, they are omitted from Fig. 7 for simplicity.

The remote commander 81 has a single show view key 84 (mode setting key). A press onto the show view key 84 not only causes the remote commander 82 to be set ON or OFF for the show view code mode but also causes a trigger to be generated to set the VTR On or OFF for the show view code mode.

In this example of the invention, a single key is commonly used to output a show view ON code and a show view OFF code in order to prevent that the show view mode ON/OFF is shown in form of a negative image, thus to change VTR from the show view mode ON status to the show view mode OFF status, or vice versa, in response to these codes or on expiration of a predetermined time.

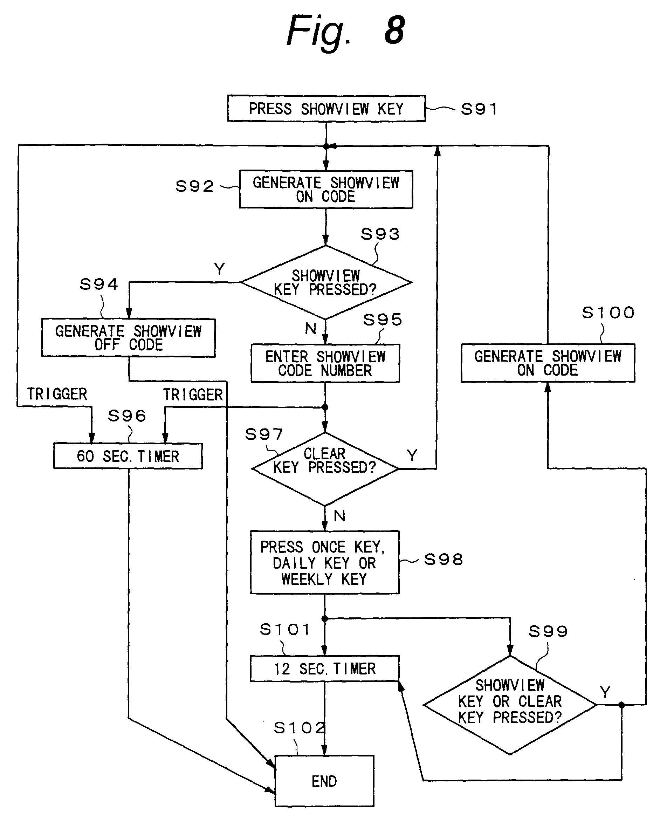

Fig. 8 is a flow chart of a process for ON/OFF control of the show view code mode according to an embodiment of the invention. Explanation of Fig. 8 is made with reference to keys shown in Fig. 7. In step S91, the show view key 84 is pressed which notifies the ON status of the show view code mode (start of entry). The process goes to both step S96 and step S92. In step S96, the output issued in step S91 functions as a trigger to start the count motion of a 60 second timer, for example, (time-out condition). When the timer counts 60 seconds, the process goes to step S102 and set the show view code mode OFF (end of entry).

In step S92, a remote control signal transmitter is controlled to generate and send the show view ON code to VTR. In the next step S93, it is monitored whether the show view key 84 was pressed once again (twice). If so, the process goes to step S94 to control the transmitter to generate and send the show view OFF code to VTR. After that, the process goes to step S102 where the show view code mode is set OFF (end of entry). If the show view key 84 was not pressed twice, the process goes to step S95.

In step S95, a show view code number corresponding to a TV program desired to reserve for recording is entered by pressing numerical keys 0 to 9 on the show view code key panel 83. Then, the process goes to both the step S96 and the step S97. In step S96, the output issued in step S95 triggers the 60 second timer.

In step S97, it is monitored whether the timer clear key 86 was pressed. If so, the process returns to both the step S96 and the step S92. In step S96, the 60 second timer is triggered. If the timer clear key 86 was not pressed, the process goes to step S98. In step S98, one of the once (spot reservation) key 85a, daily (daily reservation) key 85b and weekly (weekly reservation) key 85c is pressed. Then the process goes to both the step S99 and the step S101. In step S101, a 12 second timer, for example, starts its count motion. When the timer counts up 12 seconds, the process goes to step S102 where the show view code mode is set OFF (end of entry).

In step S99, it is monitored whichever any one of the show view key 84 and the timer clear key 86 has been pressed or not. If one of the show view key 84 and the timer clear key 86 has been pressed, the process goes to step S100 where a control is made to generate and send the show view ON code to VTR. Then, the process returns to both the step S96 and the step S92. When the step S101 results in confirming that the show view key 84 or the timer clear key 86 has been pressed, the process also goes to step S101 where the 12 second timer is stopped.

According to the illustrative embodiments of the invention described above, a user can preset a guide channel or other auxiliary data of a desired broadcasting station upon presetting a desired program to be received, even without knowledge on it. Thus, the user can more easily use his receiver device with much less errors caused by manual entry of auxiliary data.

Additionally, both VTR and its remote commander can be set ON or OFF for the mode using show view codes under the control of VTR alone without using two separate microcomputers. The microcomputer of the remote controller can be so much smaller and less expensive.

## Claims

1. A receiver comprising:
a tuner;
control means for presetting any one of broadcasting stations receivable by said tuner;
memory that stores station names of said broadcasting stations and their auxiliary data;
read-out means for reading out said auxiliary data corresponding to selected one of said station names when said station name is selected; and
setting means for setting said auxiliary data read by said read-out means to said broadcasting station preset by said control means.

2. The receiver according to claim 1, wherein said auxiliary data includes at least a guide channel.

3. The receiver according to claim 1 or 2, wherein said memory stores said station names and said auxiliary data linked to the station names for each of a plurality of countries.

4. The receiver according to claim 3, further comprising designating means for designating one of said countries, and wherein said read-out means reads out said auxiliary data corresponding to one of said station names for designated one of said countries.

5. The receiver according to claim 2, or 3 when dependent on 2, or 4, further comprising output means that outputs a display signal for displaying the station name of one of said broadcasting stations currently preset and corresponding one of said guide channels.

6. The receiver of anyone of claims 1 to 5, further comprising display means for displaying the station name of one of said broadcasting stations currently preset and corresponding one of said guide channels.

7. A receiving method comprising the steps of:
presetting any one of broadcasting stations receivable by a tuner;
reading out one of auxiliary data corresponding to selected one of station names from a memory storing station names and their auxiliary data when said station name is selected; and
setting said auxiliary data read by said read-out means to said broadcasting station preset by said control means.

8. The method according to claim 7, wherein said reading step includes at least the step of reading out said guide channels.

9. The method according to claim 6 or 7, wherein said reading step includes the step of reading out further comprising the step of reading said station names and said auxiliary data linked to the station names for a plurality of countries from said memory storing said station names and said auxiliary data.

10. The method according to claim 9, further comprising the step of designating one of said countries, and wherein said reading step includes the step of reading said auxiliary data corresponding to the station name for the selected country.

11. The method according to claim 7, 8 or 9, further comprising the step of outputting a display signal for displaying the station name of a currently preset broadcasting station and corresponding one of said guide channels.

12. A recorder system, comprising:
a tuner;
control means for presetting any one of broadcasting stations receivable by said tuner;
memory that stores station names of said broadcasting stations and their auxiliary data;
remote control means for transmitting a record reservation code and inputs for selection;
read-out means for reading out said auxiliary data corresponding to selected one of said station names when said station name is selected by said remote control means; and
setting means for setting said auxiliary data read by said read-out means to said broadcasting station preset by said control means,
said remote control means further including control means that receives inputs from a record reservation mode key and numerical keys, then generates a remote control signal, and selectively generates a record reservation mode ON code or a record reservation mode OFF code during its control process;
said remote control means changing said recorder device from a record reservation ON mode to a record reservation OFF mode, or vice versa, in response to said record reservation mode ON code and said record reservation mode OFF code.
